# EUROPEAN PATENT SPECIFICATION

(11) **EP 3 268 443 B1**
(45) Date of publication and mention of the grant of the patent: **24.06.2020**
(21) Application number: 15884229.4
(22) Date of filing: 10.03.2015
(51) Int. Cl.: C09J 183/04, C09D 183/06, C08L 83/06

(54) **A MOISTURE AND RADIATION CURABLE ADHESIVE COMPOSITION AND THE USE THEREOF**
FEUCHTIGKEITS- UND STRAHLUNGSHÄRTBARE KLEBSTOFFZUSAMMENSETZUNG UND DEREN VERWENDUNG
COMPOSITION ADHÉSIVE DURCISSABLE PAR RAYONNEMENT ET À L'HUMIDITÉ ET SON UTILISATION

(43) Date of publication of application: 17.01.2018
(73) Proprietor: Henkel IP & Holding GmbH, 40589 Düsseldorf (DE); Henkel AG & Co. KGaA, 40589 Düsseldorf (DE)
(72) Inventor: LU, Zhixiang, East Lyme, Connecticut 06333 (US); LI, Zhiming, Shanghai 201203 (CN); LI, Jinyou, Shanghai 203201 (CN); LU, Zheng, South Glastonbury, Connecticut 06073 (US); ZHANG, Yong, Shanghai 200125 (CN)
(74) Representative: Henkel IP Department
(86) International application number: PCT/CN2015/073942
(87) International publication number: WO 2016/141546

(56) References cited:
- EP-A2- 0 396 246
- WO-A1-99/67318
- US-A- 5 663 269
- US-A1- 2012 071 604
- US-B1- 6 828 355
- US-B1- 6 828 355

## Description

### Technical Field

The present invention relates to a moisture and radiation curable adhesive composition and the use thereof, in particular, to a moisture and radiation curable adhesive composition used as a liquid optical clear adhesive (LOCA) for handheld device and display (HHDD).

### Background

Optically clear adhesives were used in the display industry to fill in the gaps between different layers of the displays in order to improve the image quality and the durability of the displays. The current problems when using conventional optically clear adhesives include the Mura effect, delamination, and durability. "Mura" is a Japanese term for "unevenness", and the effect is used to describe a low-contrast, irregular pattern or region that causes uneven screen uniformity on display panels under certain conditions. The Mura effect generally results from the build-up of the stress in different layers due to the mismatch of different materials including the glass cover, adhesive, LCD, etc., especially after the long term thermal circles. The stress build-up will cause the failure of the adhesion and in turn the delamination will happen, which will deteriorate the image quality provided by the displays. In order to improve the optical properties, it is necessary to relieve the stress in the different substrates and to reduce the build-up of the stress during the thermal cycles. Meanwhile, other useful properties of the adhesive such as adhesion and transparency should be maintained.

WO 99/67318 describes photo-curable and moisture-curable silicone adhesive compositions comprising a (meth)acryloxyalkylalkoxy-terminated polysiloxane comprising at least one (meth)acryloxyalkyl group and a second organopolysiloxane which can be capped with one or two (meth)acryloxy groups. The functionalised polysiloxanes may also comprise moisture curing groups.

US 6 828 355 B is directed to compositions used for preparing adhesives and coatings and comprising an organopolysiloxane capped at both ends with a (meth)acryloxy group, a hydroxyl-functionalised silicone resin, a photoinitiator and a moisture cure catalyst.

WO 2013173976 A1 discloses a liquid photo-curable adhesive composition which may significantly reduce or eliminate Mura effect even when stress was imposed to the display panel, comprising: (a) 5 to 30 wt% of urethane acrylate, (b) 30 to 80 wt% of plasticizer, (c) 0.02 to 5 wt% of photo initiator, and (d) 0 to 30 wt % of acrylate monomers and/or oligomer.

US 20130187144 A1 discloses a curable composition comprising at least one radiation-curable epoxy resin, at least one anti-oxidant, and at least one photo initiator salt. It is reported that the product of such composition exhibit low bulk moisture permeability, and thus prevent a decrease of display quality due to Mura effect.

In addition, US 20130323521 A1 discloses an adhesive composition comprising: an alkyl (meth)acrylate ester, wherein the alkyl group has 4 to 18 carbon atoms; a hydrophilic copolymerizable monomer; and a free-radical generating initiator; wherein the adhesive composition maintains a tan delta value of between about 0.5 and about 1.0 at a temperature of between about 25°C and about 100°C. It is reported that the product of such composition can improve stress relieving as a result of the display module assembly process which is particularly beneficial to reduce Mura effect.

While attempt have been made to provide adhesives to decrease or eliminate Mura effect, the above products are acrylate ester-based or epoxy-based which have the drawbacks such as lower stability under high temperature, lower stability under high humidity, yellowing, etc.

As such, there remains a need to develop an improved adhesive composition which possesses excellent properties including hardness, shrinkage, stress absorbing, thermal stability, adhesion and transmittance.

### Summary of the Invention

One aspect of the present invention is a moisture and radiation curable adhesive composition, comprising:
(a) at least one mono(meth)acryloxy terminated polyorganosiloxane represented by the formula: 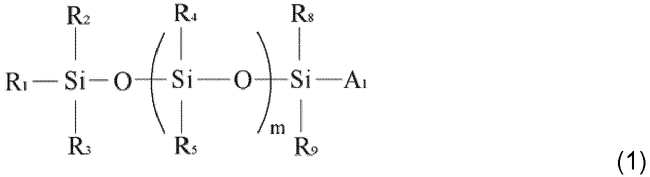 wherein,
   R₁ to R₅, R₈ and R₉ are each independently selected from the group consisting of C₁-C₂₀ alkyl, C₁-C₂₀ alkoxyl, C₂-C₂₀ alkenyl, C₃-C₂₀ cycloalkyl, and C₇-C₂₂ aralkyl,
   with the proviso that at least one of R₁ to R₅, R₈ and R₉ is C₁-C₂₀ alkoxyl,
   m is an integer of from 1 to 1000,
   A₁ is represented by the formula (2):

      (R₁₀)ₐ(R₁₁)_{b}(R₁₂)_{c}R₁₃ (2)

      wherein:
      R₁₀ is C₁-C₂₀ alkylene,
      R₁₁ is C₆-C₂₁ arylene,
      R₁₂ is C₁-C₂₀ alkylene,
      R₁₃ is (meth)acryloxy,
      a is an integer of from 0 to 10,
      b is an integer of from 0 to 10, and
      c is an integer of from 0 to 10;
(b) at least one di(meth)acryloxy terminated polyorganosiloxane represented by the formula: 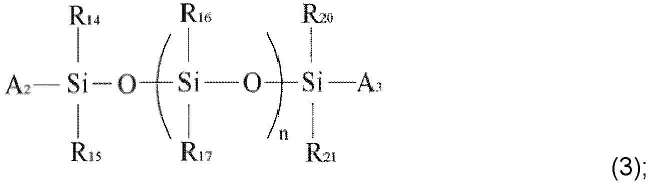 wherein:
   R₁₄ to R₁₇, R₂₀ and R₂₁ are each independently selected from the group consisting of C₁-C₂₀ alkyl, C₁-C₂₀ alkoxyl, C₂-C₂₀ alkenyl, C₃-C₂₀ cycloalkyl, and C₇-C₂₂ aralkyl,
   with the proviso that at least one of R₁₄ to R₁₇, R₂₀ and R₂₁ is C₁-C₂₀ alkoxyl, n is an integer of from 1 to 1000,
   A₂ and A₃ are each independently represented by the formula:

      (R₂₂)_{d}(R₂₃)ₑ(R₂₄)_{f}R₂₅ (4)

      wherein:
      R₂₂ is C₁-C₂₀ alkylene,
      R₂₃ is C₆-C₂₁ arylene,
      R₂₄ is C₁-C₂₀ alkylene,
      R₂₅ is (meth)acryloxy,
      d is an integer of from 0 to 10,
      e is an integer of from 0 to 10, and
      f is an integer of from 0 to 10;
(c) a photoinitiator;
(d) a moisture curing catalyst;
(e) optionally, a chain extender; and
(f) optionally, a moisture crosslinker.

Another aspect is the use of the moisture and radiation curable adhesive composition according to present invention for bonding or laminating various substrates, and especially in the assembly of optical components, or for bonding or laminating between optically clear substrates or between an optically clear substrate and an opaque substrate.

Yet another aspect is a coated substrate which is coated on at least one surface with the moisture and radiation curable adhesive composition according to the present invention.

Yet another aspect is a cured product of the moisture and radiation curable adhesive composition according to the present invention.

Other features and aspects of the subject matter are set forth in greater detail below.

### Detailed Description

It is to be understood by one of ordinary skill in the art that the present discussion is a description of exemplary embodiments only, and is not intended as limiting the broader aspects of the present invention.

As used herein, the term "C₁-C₂₀ alkyl" refers to a monovalent linear or branched moiety containing only single bonds between carbon atoms in the moiety and including, for example, C₁-C₁₈-, C₁-C₁₂-, C₁-C₁₀-, C₁-C₈-, C₁-C₆- or C₁-C₄- alkyl. Examples thereof are methyl, ethyl, propyl, isopropyl, n-butyl, sec-butyl, isobutyl, tert-butyl, n-pentyl, n-hexyl, heptyl, 2,4,4-trimethylpentyl, 2-ethylhexyl, n-octyl, n-nonyl, n-decyl, n-undecyl, n-dodecyl, n-hexadecyl, n-octadecyl and n-eicosyl.

As used herein, "C₂-C₂₀ alkenyl group" refers to a straight or branched chain hydrocarbon having from two to twenty carbon atoms, with at least one unsaturation, and including, for example, C₂-C₁₈-, C₂-C₁₂-, C₂-C₁₀-, C₂-C₈-, C₂-C₆- or C₂-C₄- alkenyl. Typical examples are groups such as vinyl, allyl, 1-propen-2-yl, 1-buten-4-yl, 2-buten-4-yl and 1-penten-5-yl.

As used herein, the term "C₁-C₂₀ alkoxyl" refers to the group -O-R wherein R is C₁-C₂₀-alkyl as defined above, and including for example, C₁-C₁₈-, C₁-C₁₂-, C₁-C₁₀-, C₁-C₈-, C₁-C₆- or C₁-C₄- alkoxyl.

As used herein, the term "C₆-C₂₀ aryl" refers to an monovalent unsaturated aromatic carbocyclic group of from 6 to 20 carbon atoms having a single ring (e.g., phenyl) or multiple condensed (fused) rings, wherein at least one ring is aromatic (e.g., naphthyl, dihydrophenanthrenyl, fluorenyl, or anthryl). Preferred examples include phenyl, naphthyl, phenantrenyl and the like.

As used herein, the term "C₇-C₂₂ alkylaryl" refers to aryl groups having from 7 to 22 carbon atoms and an alkyl substituent, including methyl phenyl, ethyl phenyl, methyl naphthyl, ethyl naphthyl, and the like.

As used herein, the term "C₁-C₂₀ alkylene" refers to a divalent linear or branched moiety containing only single bonds between carbon atoms in the moiety and including, for example, C₁-C₁₈-, C₁-C₁₂-, C₁-C₁₀-, C₁-C₈-, C₁-C₆- or C₁-C₄- alkylene. Examples thereof are methylene, ethylene, propylene, isopropylene, n-butylene, sec-butylene, isobutylene, tert-butylene, n-pentylene, n-hexylene, n-heptylene, 2,4,4-trimethylpentylene, 2-ethylhexylene, n-octylene, n-nonylene, n-decylene, n-undecylene, n-dodecylene, n-hexadecylene, n-octadecylene and n-eicosylene.

As used herein, the term "C₆-C₂₀ arylene" refers to a divalent unsaturated aromatic carbocyclic group of from 6 to 20 carbon atoms having a single ring (e.g., phenylene) or multiple condensed (fused) rings, wherein at least one ring is aromatic (e.g., naphthylene, dihydrophenanthrenylene, fluorenylene, or anthrylene). Preferred examples include phenylene, naphthylene, phenantrenylene and the like.

As used herein, the term "(meth)acryloxy group" represents both acryloxy and methacryloxy group.

As used herein, the above groups may be further substituted or unsubstituted. When substituted, hydrogen atoms on the groups are replaced by substituent group(s) that is(are) one or more group(s) independently selected from alkyl, alkenyl, alkynyl, cycloalkyl, cycloalkenyl, cycloalkynyl, aryl, heteroaryl, heteroalicyclyl, aralkyl, heteroaralkyl, (heteroalicyclyl)alkyl, hydroxy, protected hydroxyl, alkoxy, aryloxy, acyl, ester, mercapto, alkylthio, arylthio, cyano, halogen, carbonyl, thiocarbonyl, O-carbamyl, N-carbamyl, O-thiocarbamyl, N-thiocarbamyl, C-amido, N-amido, S-sulfonamido, N-sulfonamido, C-carboxy, protected C-carboxy, O-carboxy, isocyanato, thiocyanato, isothiocyanato, nitro, silyl, sulfenyl, sulfinyl, sulfonyl, haloalkyl, haloalkoxy, trihalomethanesulfonyl, trihalomethanesulfonamido, and amino, including mono- and di-substituted amino groups, and the protected derivatives thereof. In case that an aryl is substituted, substituents on an aryl group may form a non-aromatic ring fused to the aryl group, including a cycloalkyl, cycloalkenyl, cycloalkynyl, and heterocyclyl.

All percentages, parts and ratios are based upon the total weight of the compositions of the present invention, unless otherwise specified. All such weights as they pertain to listed ingredients are based on the active level and, therefore, do not include carriers or by-products that may be included in commercially available materials.

In one aspect, the present disclosure is generally directed to a moisture and radiation curable adhesive composition, comprising following components:
(a) at least one mono(meth)acryloxy terminated polyorganosiloxane represented by the formula: 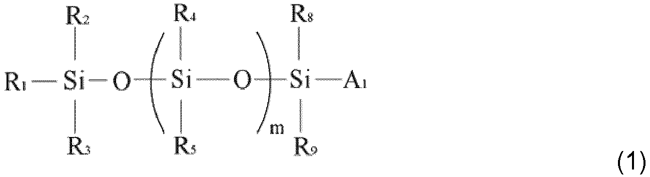 wherein,
   R₁ to R₅, R₈ and R₉ are each independently selected from the group consisting of C₁-C₂₀ alkyl, C₁-C₂₀ alkoxyl, C₂-C₂₀ alkenyl, C₃-C₂₀ cycloalkyl, and C₇-C₂₂ aralkyl,
   with the proviso that at least one of R₁ to R₅, R₈ and R₉ is C₁-C₂₀ alkoxyl,
   m is an integer of from 1 to 1000,
   A₁ is represented by the formula (2):

      (R₁₀)ₐ(R₁₁)_{b}(R₁₂)_{c}R₁₃ (2)

      wherein:
      R₁₀ is C₁-C₂₀ alkylene,
      R₁₁ is C₆-C₂₁ arylene,
      R₁₂ is C₁-C₂₀ alkylene,
      R₁₃ is (meth)acryloxy,
      a is an integer of from 0 to 10,
      b is an integer of from 0 to 10, and
      c is an integer of from 0 to 10;
(b) at least one di(meth)acryloxy terminated polyorganosiloxane represented by the formula: 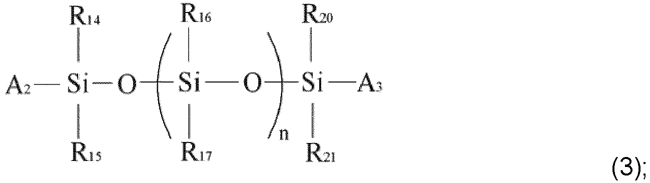 wherein:
   R₁₄ to R₁₇, R₂₀ and R₂₁ are each independently selected from the group consisting of C₁-C₂₀ alkyl, C₁-C₂₀ alkoxyl, C₂-C₂₀ alkenyl, C₃-C₂₀ cycloalkyl, and C₇-C₂₂ aralkyl,
   with the proviso that at least one of R₁₄ to R₁₇, R₂₀ and R₂₁ is C₁-C₂₀ alkoxyl, n is an integer of from 1 to 1000,
   A₂ and A₃ are each independently represented by the formula:

      (R22)d(R23)e(R24)fR25 (4)

      wherein:
      R₂₂ is C₁-C₂₀ alkylene,
      R₂₃ is C₆-C₂₁ arylene,
      R₂₄ is C₁-C₂₀ alkylene,
      R₂₅ is (meth)acryloxy,
      d is an integer of from 0 to 10,
      e is an integer of from 0 to 10, and
      f is an integer of from 0 to 10;
(c) a photoinitiator;
(d) a moisture curing catalyst;
(e) optionally, a chain extender; and
(f) a moisture crosslinker.

### Component (a)

The at least one mono(meth)acryloxy terminated polyorganosiloxane of the moisture and radiation curable adhesive composition comprised in the moisture and radiation curable adhesive composition according to the present invention is represented by the formula:

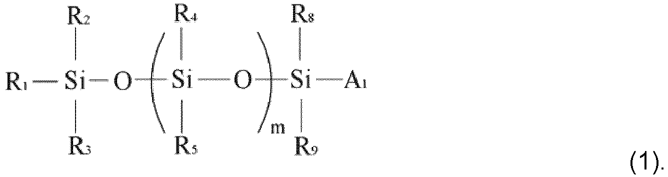

In one embodiment, R₁ to R₅, R₈ and R₉ are each independently selected from the group consisting of C₁-C₂₀ alkyl, C₁-C₂₀ alkoxyl, C₂-C₂₀ alkenyl, C₃-C₂₀ cycloalkyl, and C₇-C₂₂ aralkyl, with the proviso that at least one of R₁ to R₅, R₈ and R₉ is C₁-C₂₀ alkoxyl.

Preferably, at least one of R₁ to R₃, R₈ and R₉ is C₁-C₈ alkoxyl, and the others of R₁ to R₅, R₈ and R₉ are each independently selected from the group consisting of C₁-C₈ alkyl, C₂-C₈ alkenyl, C₃-C₈ cycloalkyl, and C₇-C₁₆ aralkyl. More preferably, at least one of R₁ to R₃, R₈ and R₉ is C₁-C₆ alkoxyl, and the others of R₁ to R₅, R₈ and R₉ are each independently C₁-C₆ alkyl and C₁-C₆ alkoxyl, for example, methyl, ethyl, propyl, isopropyl, n-butyl, sec-butyl, isobutyl, tert-butyl, pentyl, hexyl, methoxy, ethoxy, propoxy, n-butoxy, sec-butoxy, isobutoxy, tert-butoxy, n-pentoxy, n-hexoxy, etc.

In one preferred embodiment, R₁ to R₅ are C₁-C₆ alkyl, preferably methyl, and R₈ and R₉ are C₁-C₆ alkoxyl, preferably methoxy.

In another embodiment, the index m is an integer of from 10 to 1800, preferably from 100 to 800, more preferably from 200 to 600.

In yet another embodiment, with respect to A₁ represented by the formula (2):

(R₁₀)ₐ(R₁₁)_{b}(R₁₂)_{c}R₁₃ (2),

R₁₀ is C₁-C₈ alkylene, preferably C₁-C₄ alkylene, more preferably methylene or ethylene. R₁₁ is C₆-C₉ alkylene, preferably phenylene or naphthalene. R₁₂ is C₁-C₈ alkylene, preferably C₁-C₄ alkylene, more preferably methylene or ethylene. R₁₃ is (meth)acryloxy. The index a is an integer of from 1 to 5, preferably from 1 to 3, b is an integer of from 0 to 5, preferably from 0 to 3, and c is an integer of from 0 to 5, preferably from 0 to 3.

In one preferred embodiment, R₁₀ is methylene, a is 3, b and c are 0, and thus A₁ is (meth)acryloxypropyl group, preferably acryloxypropyl group.

In another preferred embodiment, R₁₀ is ethylene, R₁₁ is phenylene, R₁₂ is methylene, a, b and c are 1, and thus A₁ is (meth)acryloxymethylphenethyl group, preferably acryloxymethylphenethyl group.

According to the present invention, the moisture and radiation curable adhesive composition may comprises one or more mono(meth)acryloxy terminated polyorganosiloxanes each represented by formula (1). Preferably, the curable composition comprises one or two mono(meth)acryloxy terminated polyorganosiloxanes each represented by formula (1).

In the moisture and radiation curable adhesive composition according to the present invention, the component (a) is present in an amount from 40 to 85% by weight, preferably 45 to 80% by weight, based on the total weight of all components.

The mono(meth)acryloxy terminated polyorganosiloxane according to the present invention is prepared by conventional methods known in the art, for example as disclosed in US 6140444 A, the content of which is incorporated by reference in its entirety.

More specifically, the process for preparing component (a) includes the steps of forming a mixture of a mono-silanol-terminated reactant, an alkoxysilane having (meth)acryloxy group, and organolithium catalyst, and reacting the mixture with agitation in the absence of moisture until the desired amount of silanol capping has occurred. Where substantially complete capping is desired, the equivalent ratio of silanol groups to alkoxysilane is preferably from about 1:0.95 to about 1:1.5, and more preferably from about 1:1 to about 1:1.2. Any volatile materials remaining in the reaction mixture after the capping has reached the required level can be removed by a mild heating under reduced pressure. An inert gas can be passed through the reaction mixture during the removal of the volatile materials.

The silanol-terminated reactant can be virtually any useful silanol-terminated material within the formula (5): 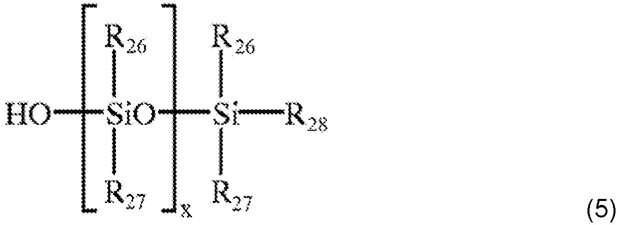 wherein R₂₆ to R₂₈ are each independently selected from the group consisting of C₁-C₂₀ alkyl, C₁-C₂₀ alkoxyl, C₂-C₂₀ alkenyl, C₃-C₂₀ cycloalkyl, and C₇-C₂₂ aralkyl; and x is from about 1 to about 1,200, such as about 10 to about 1,000.

Preferably, R₂₆ to R₂₈ are each independently selected from the group consisting of C₁-C₈ alkyl, C₁-C₈ alkoxyl, C₂-C₈ alkenyl, C₃-C₈ cycloalkyl, and C₇-C₁₆ aralkyl. More preferably, R₂₆ to R₂₈ are each independently selected from C₁-C₆ alkyl and C₁-C₆ alkoxyl, for example, methyl, ethyl, propyl, isopropyl, n-butyl, sec-butyl, isobutyl, tert-butyl, pentyl, hexyl, methoxy, ethoxy, propoxy, n-butoxy, sec-butoxy, isobutoxy, tert-butoxy, n-pentoxy, n-hexoxy, etc. Most preferably, R₂₆ to R₂₈ are all methyl.

The viscosities of the mono-silanol-terminated organopolysiloxanes are within the range of from about 1 cps to about 150,000 cps, preferably from about 100 cps to about 10,000 cps measured using a Brookfield viscometer, at a temperature of about 25°C (room temperature).

The alkoxysilane having (meth)acryloxy group includes a silane containing at least two alkoxy groups and at least one (meth)acryloxy group. More specifically, the alkoxysilane having (meth)acryloxy group includes at least one compound of the formula (5):

(R₂₉)ₐ(R₃₀)_{b}Si(OR₃₁)_{4-(a+b}) (6)

wherein R₂₉ to R₃₁ each independently selected from the group consisting of C₁₋₂₀ alkyl, C₂₋₂₀ alkyl and C₆₋₂₀ aryl, preferably C₁₋₆ alkyl, C₂₋₆ alkyl and C₆₋₁₄ aryl such as methyl, ethyl, n-propyl, isopropyl, phenyl, vinyl, and allyl groups. At least one of R₂₉ and R₃₀ is (meth)acryloxy group, and a is 0, 1 or 2; b is 0, 1 or 2; and a+b is 1 or 2.

Representative alkoxysilane having (meth)acryloxy group useful in the present invention include: (γ-acryloxymethyl)phenethyltrimethoxysilane, (γ-acryloxymethyl)trimethoxysilane, (γ-acryloxypropyl)methylbis(trimethylsiloxy)silane, (γ-acryloxypropyl)methyldimethoxysilane, (γ-acryloxypropyl)methyldiethoxysilane, (γ-acryloxypropyl)trimethoxysilane, (γ-acryloxypropyl)tris(trimethylsiloxy)silane, (γ-methacryloxypropyl)bis(trimethylsiloxy)methylsilane, (γ-methacryloxymethyl)bis(trimethylsiloxy)methylsilane, (γ-methacryloxymethyl)methyldimethoxysilane, (γ-methacryloxymethylphenethyl)tris(trimethylsiloxy)silane, (γ-methacryloxymethyl)tris(trimethylsiloxy)silane, (γ-methacryloxypropyl)methyldimethoxysilane, (γ-methacryloxypropyl)methyldiethoxysilane, (γ-methacryloxypropyl)triethoxysilane, (γ-methacryloxypropyl)triisopropoxysilane, (γ-methacryloxypropyl)trimethoxysilane, (γ-methacryloxypropyl)tris(methoxyethoxy)silane, (γ-methacryloxypropyl)tris(trimethylsiloxy)silane.

Preferably, the alkoxysilane having (meth)acryloxy group is selected from (γ-acryloxymethyl)phenethyltrimethoxysilane, (γ-acryloxypropyl)trimethoxysilane, (γ-acryloxymethyl)trimethoxysilane, and combination thereof.

The organolithium reagent is preferably an alkyl lithium, such as methyl, n-butyl, sec-butyl, t-butyl, n-hexyl, 2-ethylhexyl and n-octyl lithium. Other useful catalysts include phenyl lithium, vinyl lithium, lithium phenylacetylide, lithium (trimethylsilyl) acetylide, lithium silanolates and lithium siloxanolates. The organo group can also be an amine-containing group, such as dimethylamine, diethylamine, diisopropylamine or dicyclohexylamine, or a silicone-containing group.

Generally, the amount of lithium in the reaction mixture is from 1 ppm to about 1000 ppm, preferably from about 5 ppm to about 500 ppm, such as from about 8 ppm to about 200 ppm, based on the weight of the reactants.

The amount of the organolithium catalyst used in the catalyst system depends on the reactivity of the silanol group-containing reactant and the reactivity of the alkoxysilane containing the polymerizable ethylenically unsaturated group. The amount chosen may be readily determined by those persons skilled in the art.

After the reaction, the organolithium catalyst can be reacted with carbon dioxide, precipitated as lithium carbonate and removed from the reaction mixture by liquid-solid separation means such as centrifuging, filtration and the like. Low molecular weight hydroxylamine and other low boiling point materials can be separated by heating the reaction mixture under reduced pressure.

The process can be carried out at temperatures of from about room temperature (about 25°C) to about 150°C. The temperature at which the process is conducted depends on the particular reactants chosen, the identity and amount of the constituents of the catalyst system and the length of time the reaction can proceed.

### Component (b)

The at least one di(meth)acryloxy terminated polyorganosiloxane of the moisture and radiation curable adhesive composition comprised in the moisture and radiation curable adhesive composition according to the present invention is represented by the formula:

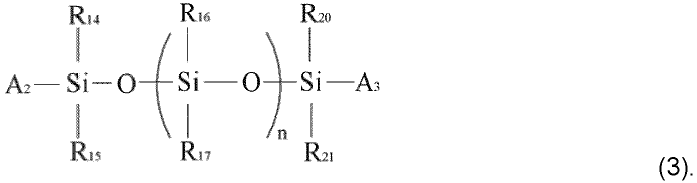

In one embodiment, R₁₄ to R₁₇, R₂₀ and R₂₁ are each independently selected from the group consisting of C₁-C₂₀ alkyl, C₁-C₂₀ alkoxyl, C₂-C₂₀ alkenyl, C₃-C₂₀ cycloalkyl, and C₇-C₂₂ aralkyl, with the proviso that at least one of R₁₄ to R₁₇, R₂₀ and R₂₁ is C₁-C₂₀ alkoxyl.

Preferably, at least one of R₁₄, R₁₅, R₂₀ and R₂₁ is C₁-C₈ alkoxyl, and the others of R₁₄ to R₁₇, R₂₀ and R₂₁ are preferably each independently selected from the group consisting of C₁-C₈ alkyl, C₂-C₈ alkenyl, C₃-C₈cycloalkyl, and C₇-C₁₆ aralkyl. More preferably, at least one of R₁₄, R₁₅, R₂₀ and R₂₁ is C₁-C₆ alkoxyl, and the others of R₁₄ to R₁₇, R₂₀ and R₂₁ are each independently C₁-C₆ alkyl and C₁-C₆ alkoxyl, for example, methyl, ethyl, propyl, isopropyl, n-butyl, sec-butyl, isobutyl, tert-butyl, pentyl, hexyl, methoxy, ethoxy, propoxy, n-butoxy, sec-butoxy, isobutoxy, tert-butoxy, n-pentoxy, n-hexoxy, etc.

In one preferred embodiment, R₁₆ and R₁₇ are C₁-C₆ alkyl, preferably methyl, and R₁₄, R₁₅, R₂₀ and R₂₁ are C₁-C₆ alkoxyl, preferably methoxy.

In another embodiment, the index n is an integer of from 10 to 1800, preferably from 100 to 800, more preferably from 200 to 600.

In yet another embodiment, with respect to A₂ and A₃ each independently represented by the formula (7):

(R32)d(R33)e(R34)fR35 (7),

R₃₂ is C₁-C₈ alkylene, preferably C₁-C₄ alkylene, more preferably methylene or ethylene. R₃₃ is C₆-C₉ alkylene, preferably phenylene or naphthalene. R₃₄ is C₁-C₈ alkylene, preferably C₁-C₄ alkylene, more preferably methylene or ethylene. R₃₅ is (meth)acryloxy. The index d is an integer of from 1 to 5, preferably from 1 to 3, e is an integer of from 0 to 5, preferably from 0 to 3, and f is an integer of from 0 to 5, preferably from 0 to 3.

In one preferred embodiment, R₃₂ is methylene, d is 3, e and f are 0, and thus at least one of A₂ and A₃ is (meth)acryloxypropyl group, preferably acryloxypropyl group.

In another preferred embodiment, R₃₂ is ethylene, R₃₃ is phenylene, R₃₄ is methylene, d, e and f are 1, and thus at least one of A₂ and A₃ is (meth)acryloxymethylphenethyl group, preferably acryloxymethylphenethyl group.

According to the present invention, the moisture and radiation curable adhesive composition may comprises one or more di(meth)acryloxy terminated polyorganosiloxanes each represented by formula (2). Preferably, the curable composition comprises one or two di(meth)acryloxy terminated polyorganosiloxanes each represented by formula (1).

In the moisture and radiation curable adhesive composition according to the present invention, the component (b) is present in an amount from 10 to 50% by weight, preferably 15 to 45% by weight, based on the total weight of all components.

The preparation method of di(meth)acryloxy terminated polyorganosiloxane may be similar to that of mono(meth)acryloxy terminated polyorganosiloxane as described above by replacing the monosilanol-terminated reactant with disilanol-terminated reactant represent by the formula (8): 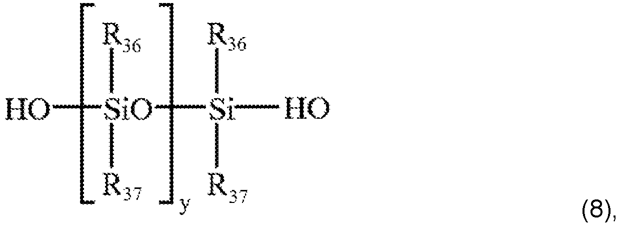 wherein, R₃₆ and R₃₇ are each independently selected from the group consisting of C₁-C₂₀ alkyl, C₁-C₂₀ alkoxyl, C₂-C₂₀ alkenyl, C₃-C₂₀ cycloalkyl, and C₇-C₂₂ aralkyl; and y is from about 1 to about 1,200, such as about 10 to about 1,000.

Preferably, R₃₆ and R₃₇ are each independently selected from the group consisting of C₁-C₈ alkyl, C₁-C₈ alkoxyl, C₂-C₈ alkenyl, C₃-C₈ cycloalkyl, and C₇-C₁₆ aralkyl. More preferably, R₃₆ and R₃₇ are each independently selected from C₁-C₆ alkyl and C₁-C₆ alkoxyl, for example, methyl, ethyl, propyl, isopropyl, n-butyl, sec-butyl, isobutyl, tert-butyl, pentyl, hexyl, methoxy, ethoxy, propoxy, n-butoxy, sec-butoxy, isobutoxy, tert-butoxy, n-pentoxy, n-hexoxy, etc. Most preferably, R₃₂ and R₃₃ are all methyl.

The viscosities of the mono-silanol-terminated organopolysiloxanes are within the range of from about 1 cps to about 150,000 cps, preferably from about 100 cps to about 10,000 cps measured using a Brookfield viscometer, at a temperature of about 25°C.

### Component (c)

The moisture and radiation curable adhesive composition further comprises a photoinitiator to initiate the radiation curing, preferably UV curing of the composition upon receiving sufficient UV radiation.

There is no particular limitation to the photoinitiator useful in the present invention. Suitable photoinitiators include, but are not limited to, organic peroxides, azo compounds, quinones, benzophenones, nitroso compounds, acryl halides, hydrazones, mercapto compounds, pyrylium compounds, triacrylimidazoles, bisimidazoles, chloroalkyltriazines, benzoin ethers, benzil ketals, thioxanthones, acetophenones, acylphosphine oxides, alpha hydroxyl ketones, alpha amino ketones, derivatives of the aforementioned compounds, and mixtures thereof.

Exemplary photoinitiators are benzil ketals such as 2,2-dimethoxy-2-phenyl acetophenone (available from Ciba Specialty Chemicals under the trademark Irgacure 651); acetophenone derivatives such as 2,2-diethoxyacetophenone ("DEAP", available from First Chemical Corporation); 2-hydroxy-2-methyl-1-phenyl-propan-1-one ("HMPP", available from Ciba Specialty Chemicals under the trademark Darocur 1173); 1-hydroxy-cyclohexyl-phenyl ketone (available from Ciba Specialty Chemicals under the name Irgacure 184); 2-benzyl-2-N, N-dimethylamino-1-(4-morpho linophenyl)-1-butanone (available from Ciba Specialty Chemicals under the trademark Irgacure 369); 2-methyl-1-(4-(methylthio)phenyl)-2-morpholinopropan-1-one (available from Ciba Specialty Chemicals under the trademark Irgacure 907); or acylphosphine oxides such as 2,4,6-trimethylbenzoyl diphenylphosphine oxide ("TPO", available from Ciba Specialty Chemicals in 50/50 wt% blends with HMPP (as Irgacure 4265)), bis(2,6-dimethoxybenzoyl)-2,4,4-trimethylpentylphosphine oxide (available from Ciba Specialty Chemicals in the form of blends with other ketones including: 25/75 wt% blend with HMPP as Irgacure 1700, and 1-hydroxy-cyclohexyl-phenyl-ketone, (or HCPK) as Irgacure 1850 or 1800 depending on proportions), or bis(2,4,6-trimethylbenzoyfl)-phenylphosphine oxide (available from Ciba Specialty

Chemicals under the trademark Irgacure 819).

In one preferred embodiment, the photoinitiator useful in the present invention is selected from the group consisting of 2-hydroxy-2-methyl-1-phenyl-propan-1-one, bis(2,4,6-trimethylbenzoyfl)-phenylphosphine oxide, 1-hydroxy-cyclohexyl-phenyl ketone, 2,4,6-trimethylbenzoyl diphenylphosphine oxide, and the combination thereof. More preferably, the photoinitiator is 2-hydroxy-2-methyl-1-phenyl-propan-1-one.

In the moisture and radiation curable adhesive composition according to the present invention, the component (d) is present in an amount from 0.1 to 5% by weight, preferably 1 to 3% by weight, based on the total weight of all components.

### Component (d)

The moisture and radiation curable adhesive composition further comprises a moisture curing catalyst which initiates the moisture curing of the composition in the presence of moisture.

The moisture curing catalysts typically used in the moisture and radiation curable adhesive compositions of this invention include those known to be useful for facilitating moisture curing. The catalysts include metal and non-metal catalysts. Examples of the metal portion of the metal catalysts useful in the present invention include tin, titanium, zirconium, lead, iron cobalt, antimony, manganese, bismuth and zinc compounds.

In one embodiment, the tin compounds useful for facilitating the moisture curing of the composition include but are not limited to dimethyldineodecanoatetin (available from Momentive Performance Materials Inc. under the trade name of FOMREZ UL-28 A), dibutyltindilaurate, dibutyltindiacetate, dibutyltindimethoxide, tinoctoate, isobutyltintriceroate, dibutyltinoxide, solubilized dibutyl tin oxide, dibutyltin bis diisooctylphthalate, bis-tripropoxysilyl dioctyltin, dibutyltin bis-acetylacetone, silylated dibutyltin dioxide, carbomethoxyphenyl tin tris-uberate, isobutyltin triceroate, dimethyltin dibutyrate, dimethyltin di-neodecanoate, triethyltin tartarate, dibutyltin dibenzoate, tin oleate, tin naphthenate, butyltintri-2-ethylhexylhexoate, tinbutyrate, dioctyltin didecylmercaptide, bis(neodecanoyloxy)dioctylstannane, dimethylbis(oleoyloxy)stannane.

In one preferred embodiment, the moisture curing catalyst is selected from the group consisting of dimethyldineodecanoatetin (available from Momentive Performance Materials Inc. under the trade name of FOMREZ UL-28), dioctyltin didecylmercaptide (available from Momentive Performance Materials Inc. under the trade name of FOMREZ UL-32), bis(neodecanoyloxy)dioctylstannane (available from Momentive Performance Materials Inc. under the trade name of FOMREZ UL-38), dimethylbis(oleoyloxy)stannane (available from Momentive Performance Materials Inc. under the trade name of FOMREZ UL-50), and combination thereof. More preferably, the moisture curing catalyst is FOMREZ UL-28.

In the moisture and radiation curable adhesive composition according to the present invention, the component (d) is present in an amount from 0.05 to 1% by weight, preferably 0.1 to 0.5% by weight, based on the total weight of all components.

### Component (e)

The moisture and radiation curable adhesive composition may optionally comprises a chain extender.

There is no particular limitation to the chain extender useful in the present invention, and it includes but is not limited to methoxy, ethoxy, triethoxysilylethyl terminated terminated polydimethylsiloxanes, etc. Exemplary chain extenders are methoxy terminated polydimethylsiloxanes such as DMS-XM11 (available from Gelest, Inc., Morrisville, Pa.), dimethoxy(epoxypropoxypropyl) terminated polydimethylsiloxanes such as DMS-EX21 (available from Gelest, Inc., Morrisville, Pa.), ethoxy terminated dimethylsiloxanes such as DMS-XE11 (available from Gelest, Inc., Morrisville, Pa.), and triethoxysilylethyl terminated polydimethylsiloxanes such as DMS XT11 (available from Gelest, Inc., Morrisville, Pa.).

The component (e) is present in an amount from 0 to 30% by weight, preferably 0 to 25% by weight, based on the total weight of all components of the moisture and radiation curable adhesive composition according to the present invention.

### Component (f)

The moisture and radiation curable adhesive composition may optionally comprises a moisture crosslinker.

Exemplary moisture crosslinker are vinyltrichiorosilane, vinyltrimethoxysilane, vinyltriethoxysilane, (3-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxysilane, γ-methacryloxypropylmethyldimethoxysilane, p-styryltrimethoxysilane, γ-methacryloxypropyltrimethoxysilane, γ-methacryloxypropylmethyldiethoxysilane, γ-methacryloxypropyltriethoxysilane, γ-acryloxypropyltrimethoxysilane, N-(β-aminoethyl)-γ-aminopropylmethyldimethoxysilane, N-(β-aminoethyl)-γ-aminopropyltrimethoxysilane, N-(β-aminoethyl)-γ-aminopropyltriethoxysilane, γ-aminopropyltrimethoxysilane, γ-aminopropyltriethoxysilane, N-phenyl-γ-aminopropyltrimethoxysilane, N-2-(aminoethyl)-γ-aminopropyltriethoxysilane, γ-mercaptopropyltrimethoxysilane, γ-mercaptopropyltriethoxysilane, mercaptomethyltrimethoxysilane, dimethoxy-3-mercaptopropylmethylsilane, 2-(2-aminoethylthioethyl)diethoxymethylsilane, 3-(2-acetoxyethylthiopropyl)dimethoxymethylsilane, 2-(2-aminoethylthioethyl)triethoxysilane, dimethoxymethyl-3-(3-phenoxypropylthiopropyl)silane, bis(triethoxysilylpropyl)disulfide, bis(triethoxysilylpropyl)tetrasulfide, 1,4-bis(triethoxysilyl)benzene, bis(triethoxysilyl)ethane, 1,6-bis(trimethoxysilyl)hexane, 1,8-bis(triethoxysilyl)octane, 1,2-bis(trimethoxysilyl)decane, bis(triethoxysilylpropyl)amine, bis(trimethoxysilylpropyl)urea, tris-(3-trimethoxysilylpropyl)isocyanurate, γ-chloropropyltrimethoxysilane, γ-ureidopropyltriethoxysilane, trimethylsilanol, diphenylsilanediol, triphenylsilanol, γ-triethoxysilylpropyl(meth)acrylate, and hexyltrimethoxysilane.
Preferably, the moisture and radiation curable adhesive composition contains a moisture crosslinker, and the moisture crosslinker is selected from the group consisting of vinyltrimethoxysilane, 1,6-bis(trimethoxysilyl)hexane, 1,8-bis(trimethoxysilyl)octane, γ-(meth)acryloxypropyltrimethoxysilane, and combination thereof. More preferably, the moisture crosslinker is vinyltrimethoxysilane available from Evonik under the trade name of Dynasylan VTMO.

The component (f) is present in an amount from 0 to 1% by weight, preferably 0 to 0.5% by weight based on the total weight of all components.

In one embodiment, the present invention provides a moisture and radiation curable adhesive composition comprising:
40 to 85% by weight, preferably 45 to 80% by weight of component (a);
10 to 50% by weight, preferably 15 to 45% by weight of component (b);
0.1 to 5% by weight, preferably 1 to 3% by weight of component (c);
0.05 to 1% by weight, preferably 0.1 to 0.5% by weight of component (d);
1 to 30% by weight, preferably 3 to 25% by weight of component (e); and
0.05 to 1% by weight, preferably 0.1 to 0.5% by weight of component (f),
wherein, the weight percentages are based on the total weight of all components.

### Other components

The moisture and radiation curable adhesive composition may further comprise one or more optional additives, resin components and the like to improve or modify properties of the sealant composition, such as flowability, dispensing property, storage stability, curing property and physical property of the cured product.

The components that may be contained in the sealant composition as needed include, but are not limited to, for example, organic or inorganic filler, thixotropic agent, diluent, modifier, coloring agent such as pigment and dye, preservative, stabilizer, plasticizer, lubricant, defoamer, leveling agent and the like.

Suitable fillers, which can be optionally used in the present invention includes, but are not limited to, inorganic fillers such as silica, diatomaceous earth, alumina, zinc oxide, iron oxide, magnesium oxide, tin oxide, titanium oxide, magnesium hydroxide, aluminium hydroxide, magnesium carbonate, barium sulphate, gypsum, calcium silicate, talc, glass bead, sericite activated white earth, bentonite, aluminum nitride, silicon nitride, and the like; organic fillers, such as polymethyl methacrylate, polyethyl methacrylate, polypropyl methacrylate, polybutyl methacrylate, poly acrylonitrile, polystyrene, polybutadiene, polypentadiene, polyisoprene, polyisopropylene, and the like. The filler may be used alone or in combination thereof.

Suitable thixotropic agents, which can be optionally used in the present invention includes, but are not limited to, talc, fume silica, superfine surface-treated calcium carbonate, fine particulate alumina, plate-like alumina; layered compound such as montmorillonite, spicular compound such as aluminium borate whisker, and the like. Talc, fume silica and fine alumina are preferred thixotropic agents.

### The moisture and radiation curable adhesive composition

The moisture and radiation curable adhesive composition of the present invention is in the form of liquid, and the Brookfield viscosity of the composition is preferably about 50 cps to about 40,000 cps at 25°C. The liquid adhesive composition in such range of viscosity has a good flowing property which makes it easy to be applied or injected onto a substrate. The Brookfield viscosity here is measured by using a Brookfield rotational viscometer (digital Brookfield viscometer, DV-II+, available from BROOKFIELD, US) with spindles at 25°C. according to ASTM D1084-1997. The selection of spindle for testing will depend on the level of the viscosity of the adhesive composition.

### Preparation of the moisture and radiation curable adhesive composition

A mixer equipped with a mechanical stirrer, condenser, thermometer, heating mantle, nitrogen inlet, and an addition funnel is charged with components (a) and (b), and heated up to 80 °C. The contents are mixed at 120 rpm under vacuum for 3 hours, then cooled under vacuum to room temperature. The component (c), component (d) and optionally components (e) and (f) are then added to the mixer under vacuum. The vacuum is broken with nitrogen after 1 hour of mixing for all components.

### Process of bonding substrates

Another aspect of the present invention provides a process of bonding substrates, comprising,
(i) applying the moisture and radiation adhesive composition according to the present invention onto the substrate to be bonded;
(ii) laminating or stacking the substrate to be bonded to form an assembly;
(iii) photo irradiating the assembly; and
(iv) placing the assembly under ambient conditions.

Specifically, the adhesive composition according to the present invention may be coated under pressure onto the surface of the substrate following the predetermined route by means of the needle cylinder of an automatic dispensing system. Subsequently, another substrate is laminated onto the adhesive, and the height difference between the two substrates is controlled by a dispenser, e.g., Dispenser KAR03, manufactured by IINUMA-GAUGE MFG LTD. After the adhesive is self-leveled on the whole bonding area, photo irradiation is conducted from top to bottom for curing. Light source (such as ultraviolet light and visible light) and high energy ray (such as electronic beam, α-ray, γ-ray and X-ray) can be used herein for photo irradiation, with preference given to ultraviolet light in the wavelength range of about 200 nm to about 400 nm. The energy dose is 3000 mJ/cm² or more, the power intensity is about 50 to about 100 mW/cm². The UV lamp used may be such as Loctite UVALOC 1000, and the irradiation time may generally be about 5 s to about 120 s. Since the marginal areas are within the nontransparent part, it cannot be cured by UV irradiation. The bonded parts can be completely cured by storing the parts at room temperature for about 24 hours, according to the moisture-curable character of the present adhesive composition, without any need for additional equipment and processing.

### The cured adhesive product

Another aspect of the present invention also provides a cured adhesive product produced from the moisture and radiation curable adhesive composition.

Surprisingly, the cured adhesive product of the adhesive composition according to the present invention is very soft and specifically exhibited a lower Shore 00 hardness and improved elongation, meanwhile maintaining an excellent properties including good stability under high temperature and humidity and high transparency. As such, the cured adhesive product is suitable to be used in display panels, touch panels and optical devices, and can significantly decrease the shrinkage and absorb the stress built up in the substrate, which is known as the cause of the Mura effect.

In one embodiment, the cured reaction product of the composition has a Shore 00 hardness of from 1 to 30, preferably from 5 to 25, after 7 days from curing, at 25°C, as measured according to ASTM D2240.

In another embodiment, the cured reaction product of the composition has an elongation of from 100% to 300%, preferably 110% to 250%, after 7 days from curing, at 25°C, as measured according to ASTM D412.

### Use of the moisture and radiation curable adhesive composition

The moisture and radiation curable adhesive composition of the present invention may be used as a liquid optical clear adhesive (LOCA) for handheld device and display (HHDD), especially for bonding or laminating various elements in the manufacture of display panels, touch panels and optical devices.

For example, the moisture and radiation curable adhesive composition of the present invention can be used in bonding or laminating a transparent substrate with another transparent substrate, or bonding or laminating a transparent substrate with a non-transparent substrate. The transparent substrate comprises glass and transparent plastic etc., and the non-transparent substrate comprises metal, non-transparent plastic, ceramic, stone, leather and wood etc. Plastic may be for example poly(methyl methacrylate) (PMMA), polycarbonate (PC) or polyester (PET) etc.

### Example

### Synthesis of MDMA-1000

A 5 liter, 4-neck round bottom flask equipped with mechanical stirrer, heating mantle, sparge tube and thermometer was charged with 2425 g of a ω-hydroxyl terminated polydimethylsiloxane (having a viscosity of 1000 cps, commercially available from AB Specialty Silicones under the trade name of MOH 1000). The fluid was heated to a temperature of 60 °C and sparged with nitrogen for a period of time of 30 minutes followed by vacuum for another 30 minutes to remove any volatile components such as water and carbon dioxide. γ-Acryloxypropyltrimethoxysilane ("APTMS", 36 g, commercially available from Gelest) and n-butyl lithium in hexane solution (1.6M; 1.89 ml, commercially available from Sigma-Aldrich) were sequentially added to the reactor. The mixture was maintained at a temperature of 60 °C under vacuum for a period of time of 3 hours. Dry ice (1 g) was then added to the reaction mixture to quench the catalyst. The mixture was vacuum stripped to remove the volatile components. The final product is a monoacryloxypropyldimethoxysilyl-terminated PDMS, and designated as MDMA-1000 in the present invention.

### Synthesis of MDMA-100

A 1 gallon reactor equipped with mechanical stirrer, heating/cooling jacket was charged with 2500 g of a ω-hydroxyl terminated polydimethylsiloxane (having a viscosity of 100 cps, commercially available from AB Specialty Silicones under the trade name of MOH 100). The fluid was heated to a temperature of 80 °C and vacuum was applied for 60 minutes to remove any volatile component such as water and carbon dioxide. APTMS (111 g, commercially available from Gelest) and n-butyl lithium in hexane solution (1.6M; 2.0 ml, commercially available from Sigma-Aldrich) were sequentially added to the reactor. The mixture was maintained at a temperature of 80 °C under vacuum for a period of time of 3 hours. Dry ice (1 g) was then added to the reaction mixture to quench the catalyst. The mixture was vacuum stripped to remove the volatile components. The final product is a monoacryloxypropyldimethoxysilyl-terminated PDMS, and designated as MDMA-100 in the present invention.

### Synthesis of DMA-4000

A 1 gallon reactor equipped with mechanical stirrer, heating/cooling jacket was charged with 2300 g of an α,ω-hydroxyl terminated polydimethylsiloxane (having a viscosity of 4000 cps, commercially available from Emerald Performance Materials under the trade name of Masil SFR 3500) The fluid was heated to a temperature of 60 °C and vacuum was applied for 60 minutes to remove any volatile component such as water and carbon dioxide. APTMS (65 g, commercially available from Gelest) and n-butyl lithium in hexane solution (1.6M; 1.8 ml, commercially available from Sigma-Aldrich) were sequentially added to the reactor. The mixture was maintained at a temperature of 60 °C under vacuum for a period of time of 3 hours. Dry ice (1 g) was then added to the reaction mixture to quench the catalyst. The mixture was vacuum stripped to remove the volatile components. The final product is a diacryloxypropyldimethoxysilyl-terminated PDMS, and designated as DMA-4000 in the present invention.

### Synthesis of DMA-6000

A 2 gallon reactor equipped with mechanical stirrer, heating/cooling jacket was charged with 4932.5 g of an α,ω-hydroxyl terminated polydimethylsiloxane (having a viscosity of 6000 cps, commercially available from Emerald Performance Materials under the trade name of Masil SFR 6000). The fluid was heated to a temperature of 50 °C and vacuum was applied for 60 minutes to remove any volatile component such as water and carbon dioxide. APTMS (65 g, commercially available from Gelest) and n-butyl lithium in hexane solution (1.6M; 3.9 ml, commercially available from Sigma-Aldrich) were sequentially added to the reactor. The mixture was maintained at a temperature of 50 °C under vacuum for a period of time of 4 hours. Dry ice (1 g) was then added to the reaction mixture to quench the catalyst. The mixture was vacuum stripped to remove the volatile components. The final product is a diacryloxypropyldimethoxysilyl-terminated PDMS, and designated as DMA-6000 in the present invention.

### Synthesis of Chain Extender

A 2 gallon reactor equipped with mechanical stirrer, heating/cooling jacket was charged with 4400 g of an α,ω-hydroxyl terminated polydimethylsiloxane (having a viscosity of 70 cps, commercially available from Emerald Performance Materials under the trade name of Masil SFR 70). The fluid was heated to a temperature of 60 °C and vacuum was applied for 60 minutes to remove any volatile component such as water and carbon dioxide. Dimethyldimethoxysilane (320 g, commercially available from Gelest) and n-butyl lithium in hexane solution (1.6M; 3.64 ml, commercially available from Sigma-Aldrich) were sequentially added to the reactor. The mixture was maintained at a temperature of 60 °C under nitrogen protection for a period of time of 3 hours. Dry ice (1 g) was then added to the reaction mixture to quench the catalyst. The mixture was vacuum stripped to remove the volatile components. The final product will be used as the chain extender in the examples.

Following the above preparation process, adhesive compositions according to the present invention and a comparative example were obtained. Names and amounts of the components are listed in Table 1.

**Table 1. The compositions of Examples A to G (Ex. A to Ex. G)**

| | Amount (wt%) | | | | | | |
|---|---|---|---|---|---|---|---|
| Component | Ex. A | Ex. B | Ex. C | Ex. D | Ex. E | Ex. F | Ex. G |
| MDMA-100 | - | 65.8 | - | - | 20 | 50.8 | - |
| MDMA-1000 | 60 | - | 45.8 | 75.8 | 30.8 | 20 | - |
| DMA-4000 | - | 25 | 20 | - | 10 | 25 | - |
| DMA-6000 | 25.8 | - | 20 | 20 | 15 | - | 95.8 |
| Photoinitiator¹ | 2.0 | 2.0 | 2.0 | 2.0 | 2.0 | 2.0 | 2.0 |
| Moisture catalyst² | 0.2 | 0.2 | 0.2 | 0.2 | 0.2 | 0.2 | 0.2 |
| Chain extender¹ | 10 | 5 | 10 | - | 20 | - | - |
| Moisture crosslinker⁴ | 2.0 | 2.0 | 2.0 | 2.0 | 2.0 | 2.0 | 2.0 |

| | | | | | | | |
|---|---|---|---|---|---|---|---|
| ¹ Photoinitiator: 2-hydroxy-2-methyl-1-phenyl-propan-1-one, commercially available from Ciba Specialty Chemicals under the trade name of Darocur 1173. ² Moisture catalyst: dimethyldineodecanoatetin, commercially available from Momentive Performance Materials Inc. under the trade name of FOMREZ UL-28. ³ Chain extender: linear structured PDMS end-capped with methoxy groups synthesized as above. ⁴ Moisture crosslinker: vinyltrimethoxysilane available from Evonik under the trade name of Dynasylan VTMO. | | | | | | | |

For the tests, all components (with a total amount about 50 grams) were added to a plastic jar which was then spanned 3 times in a speed mixer at 3000 rpm for 30 seconds each time. 32 grams of the material was poured into a 6 inches x 6 inches metal frame with a polyethylene film and a piece of glass on each side, followed by a 60 second UV exposure from both sides with UVA intensity at 75 mW/cm². The polyethylene films were peeled off and the cured products to be tested were then kept in a 25 °C, 50% relative humidity chamber for 7 days.

The hardness according to ASTM D2240 and the elongation according to ASTM D412 of the cured products of the compositions in Table 1 are listed in Table 2.

**Table 2. Test results of the examples**

| | Results | | | | | | |
|---|---|---|---|---|---|---|---|
| Test | Ex. A | Ex. B | Ex. C | Ex. D | Ex. E | Ex. F | Ex. G |
| Shore 00 Hardness | 5 | 7 | 10 | 15 | 20 | 25 | 68 |
| Elongation (%) | 240 | 110 | 190 | 140 | 310 | 130 | 75 |
| After 7 day at 25°C | | | | | | | |

As shown in Table 1, Examples A to F are inventive examples of adhesive compositions having at least one mono(meth)acryloxy terminated polyorganosiloxane and at least one di(meth)acryloxy terminated polyorganosiloxane. Example G only comprises one di(meth)acryloxy terminated polyorganosiloxane, and listed as a comparative example which is an typical example of traditional adhesive formulations.

As demonstrated in Table 2, the Shore 00 hardness results of the cured products of Examples A to F are in the range of 5 to 25, which is significantly lower than the range (50 to 70) of traditional UV and moisture curing silicone based adhesives, e.g. Example G.

It is also clear in Table 2 that elongation results of the cured products of Examples A to F are much larger than that of Example G, which indicates that the inventive adhesive compositions are much softer than traditional formulations.

It is believed that such excellent results are due to the assumption that the combination of silicones with different curing densities brings about the free volume in the polymer which allows the polymer chain to move even after the dual cure is completed. Therefore, the stress built up in the substrates during assembly and long term thermal cycles can be largely absorbed and decreased by the inventive adhesives, and in turn Mura effect will be avoided. In addition, the softer adhesive can be used in displays as a shock absorber to increase the durability of the devices.

In addition, the inventive adhesives also exhibited properties including good adhesion to different substrates, good transmittance, good stability under room temperature, high temperature and high humidity.

## Claims

1. A moisture and radiation curable adhesive composition, comprising:
(a) at least one mono(meth)acryloxy terminated polyorganosiloxane represented by the formula: 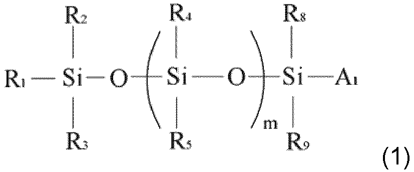 wherein,
R₁ to R₅, R₈ and R₉ are each independently selected from the group consisting of C₁-C₂₀ alkyl, C₁-C₂₀ alkoxyl, C₂-C₂₀ alkenyl, C₃-C₂₀ cycloalkyl, and C₇-C₂₂ aralkyl, with the proviso that at least one of R₁ to R₅, R₈ and R₉ is C₁-C₂₀ alkoxyl,
m is an integer of from 1 to 1000,
A₁ is represented by the formula (2):
(R₁₀)ₐ(R₁₁)_{b}(R₁₂)_{c}R₁₃ (2)
wherein:
R₁₀ is C₁-C₂₀ alkylene,
R₁₁ is C₆-C₂₁ arylene,
R₁₂ is C₁-C₂₀ alkylene,
R₁₃ is (meth)acryloxy,
a is an integer of from 0 to 10,
b is an integer of from 0 to 10, and
c is an integer of from 0 to 10;
(b) at least one di(meth)acryloxy terminated polyorganosiloxane represented by the formula: 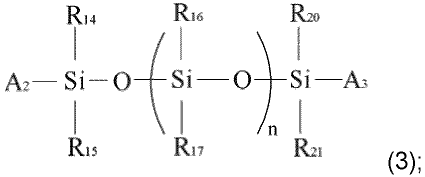 wherein:
R₁₄ to R₁₇, R₂₀ and R₂₁ are each independently selected from the group consisting of C₁-C₂₀ alkyl, C₁-C₂₀ alkoxyl, C₂-C₂₀ alkenyl, C₃-C₂₀ cycloalkyl, and C7-C22 aralkyl,
with the proviso that at least one of R₁₄ to R₁₇, R₂₀ and R₂₁ is C₁-C₂₀ alkoxyl,
n is an integer of from 1 to 1000,
A₂ and A₃ are each independently represented by the formula:
(R₂₂)_{d}(R₂₃)ₑ(R₂₄)_{f}R₂₅ (4)
wherein:
R₂₂ is C₁-C₂₀ alkylene,
R₂₃ is C₆-C₂₁ arylene,
R₂₄ is C₁-C₂₀ alkylene,
R₂₅ is (meth)acryloxy,
d is an integer of from 0 to 10,
e is an integer of from 0 to 10, and
f is an integer of from 0 to 10;
(c) a photoinitiator;
(d) a moisture curing catalyst;
(e) optionally, a chain extender; and
(f) optionally, a moisture crosslinker.

2. The moisture and radiation curable adhesive composition according to claim 1, wherein R₁ to R₅, R₈ and R₉ are each independently selected from the group consisting of C₁-C₈ alkyl, C₁-C₈ alkoxyl, C₂-C₈ alkenyl, C₃-C₈ cycloalkyl, and C₇-C₁₆ aralkyl.

3. The moisture and radiation curable adhesive composition according to claim 1 or 2, wherein R₁₀ is C₁-C₈ alkylene, preferably C₁-C₄ alkylene, more preferably methylene or ethylene; and/or R₁₁ is C₆-C₉ alkylene, preferably phenylene or naphthalene; and/or R₁₂ is C₁-C₈ alkylene, preferably C₁-C₄ alkylene, more preferably methylene or ethylene.

4. The moisture and radiation curable adhesive composition according to any of claims 1 to 3, wherein a is an integer of from 1 to 5, preferably from 1 to 3, b is an integer of from 0 to 5, preferably from 0 to 3, and c is an integer of from 0 to 5, preferably from 0 to 3.

5. The moisture and radiation curable adhesive composition according to any of claims 1 to 4, wherein R₁₄ to R₁₇, R₂₀ and R₂₁ are each independently selected from the group consisting of C₁-C₈ alkyl, C₁-C₈ alkoxyl, C₂-C₈ alkenyl, C₃-C₈cycloalkyl, and C₇-C₁₆ aralkyl and are preferably each independently selected from C₁-C₆ alkyl and C₁-C₆ alkoxyl.

6. The moisture and radiation curable adhesive composition according to any of claims 1 to 5, wherein R₂₂ is C₁-C₈ alkylene, preferably C₁-C₄ alkylene, more preferably methyl or ethyl; and/or R₂₃ is C₆-C₉ alkylene, preferably phenylene or naphthalene; and/or R₂₄ is C₁-C₈ alkylene, preferably C₁-C₄ alkylene, more preferably methyl or ethyl.

7. The moisture and radiation curable adhesive composition according to any of claims 1 to 6, wherein d is an integer of from 1 to 5, preferably from 1 to 3, e is an integer of from 0 to 5, preferably from 0 to 3, and f is an integer of from 0 to 5, preferably from 0 to 3.

8. The moisture and radiation curable adhesive composition according to any of claims 1 to 7, wherein the component (a) is present in an amount from 40 to 85% by weight, preferably 45 to 80% by weight, based on the total weight of all components.

9. The moisture and radiation curable adhesive composition according to any of claims 1 to 8, wherein the component (b) is present in an amount from 10 to 50% by weight, preferably 15 to 45% by weight, based on the total weight of all components.

10. The moisture and radiation curable adhesive composition according to any of claims 1 to 9, wherein the component (e) is present in an amount from 1 to 30% by weight, preferably 3 to 25% by weight based on the total weight of all components.

11. The moisture and radiation curable adhesive composition according to any of claims 1 to 10, wherein the cured reaction product of the composition has a Shore 00 hardness of from 1 to 30, preferably from 5 to 25, after 7 days from curing, at 25°C, as measured according to ASTM D2240; and/or an elongation of from 100% to 300%, preferably 110% to 250%, after 7 days from curing, at 25°C, as measured according to ASTM D412.

12. The moisture and radiation curable adhesive composition according to claim 1, comprising:
40 to 85% by weight, preferably 45 to 80% by weight of component (a);
10 to 50% by weight, preferably 15 to 45% by weight of component (b);
0.1 to 5% by weight, preferably 1 to 3% by weight of component (c);
0.05 to 1% by weight, preferably 0.1 to 0.5% by weight of component (d);
1 to 30% by weight, preferably 3 to 25% by weight of component (e); and
0.05 to 1% by weight, preferably 0.1 to 0.5% by weight of component (f),
wherein, the weight percentages are based on the total weight of all components.

13. A cured product of the moisture and radiation curable adhesive composition according to any of claims 1 to 12.

14. A coated substrate which is coated on at least one surface with the moisture and radiation curable adhesive composition according to any of claims 1 to 12 or the cured product according to claim 13.

15. The use of the moisture and radiation curable adhesive composition according to any of claims 1 to 12 or the cured product according to claim 13 in manufacturing display panels, touch panels or optical devices.

## Patentansprüche

1. Feuchtigkeits- und strahlungshärtbare Zusammensetzung, umfassend:
(a) mindestens ein Mono(meth)acryloxy-terminiertes Polyorganosiloxan, dargestellt durch die Formel: 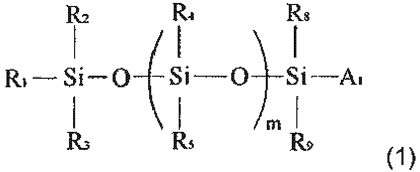 wobei,
R₁ bis R₅, R₈ und R₉ jeweils unabhängig aus der Gruppe ausgewählt sind, die aus C₁-C₂₀-Alkyl, C₁-C₂₀-Alkoxyl, C₂-C₂₀-Alkenyl, C₃-C₂₀-Cycloalkyl, und C₇-C₂₂-Aralkyl besteht, mit der Bedingung, dass R₁ bis R₅, R₈ und/oder Rg C₁-C₂₀-Alkoxyl ist,
m eine ganze Zahl von 1 bis 1000 ist,
A₁ dargestellt ist durch die Formel (2):
(R₁₀)ₐ(R₁₁)_{b}(R₁₂)_{c}R₁₃ (2)
wobei:
R₁₀ C₁-C₂₀-Alkylen ist,
R₁₁ C₆-C₂₁-Arylen,
R₁₂ C₁-C₂₀-Alkylen ist,
R₁₃ (Meth)acryloxy ist,
a eine ganze Zahl von 0 bis 10 ist,
b eine ganze Zahl von 0 bis 10 ist, und
c eine ganze Zahl von 0 bis 10 ist;
(b) mindestens ein Di(meth)acryloxy-terminiertes Polyorganosiloxan, dargestellt durch die Formel: 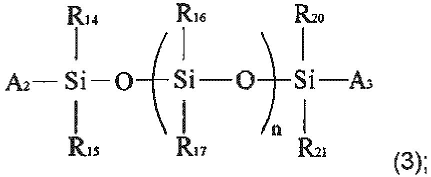 wobei:
R₁₄ bis R₁₇, R₂₀ und R₂₁ jeweils unabhängig aus der Gruppe ausgewählt sind, die aus C₁-C₂₀-Alkyl, C₁-C₂₀-Alkoxyl, C₂-C₂₀-Alkenyl, C₃-C₂₀-Cycloalkyl und C₇-C₂₂-Aralkyl besteht, mit der Bedingung, dass R₁₄ bis R₁₇, R₂₀ und/oder R₂₁ C₁-C₂₀-Alkoxyl ist,
n eine ganze Zahl von 1 bis 1000 ist,
A₂ und A₃ jeweils unabhängig dargestellt sind durch die Formel:
(R₂₂)_{d}(R₂₃)ₑ(R₂₄)_{f}R₂₅ (4)
wobei:
R₂₂ C₁-C₂₀-Alkylen ist,
R₂₃ C₆-C₂₁-Arylen ist,
R₂₄ C₁-C₂₀-Alkylen ist,
R₂₅ (Meth)acryloxy ist,
d eine ganze Zahl von 0 bis 10 ist,
e eine ganze Zahl von 0 bis 10 ist, und
f eine ganze Zahl von 0 bis 10 ist;
(c) einen Photoinitiator;
(d) einen Feuchtigkeitshärtungskatalysator;
(e) optional ein Kettenverlängerungsmittel; und
(f) optional einen Feuchtigkeitsvernetzer.

2. Feuchtigkeits- und strahlungshärtbare Klebstoffzusammensetzung nach Anspruch 1, wobei R₁ bis R₅, R₈ und R₉ jeweils unabhängig aus der Gruppe ausgewählt sind, die aus C₁-C₈-Alkyl, C₁-C₈-Alkoxyl, C₂-C₈-Alkenyl, C₃-C₈-Cycloalkyl und C₇-C₁₆-Aralkyl besteht.

3. Feuchtigkeits- und strahlungshärtbare Klebstoffzusammensetzung nach Anspruch 1 oder 2, wobei R₁₀ C₁-C₈-Alkylen, bevorzugt C₁-C₄-Alkylen, weiter bevorzugt Methylen oder Ethylen, ist; und/oder R₁₁ C₆-C₉-Alkylen, bevorzugt Phenylen oder Naphthalin, ist; und/ oder R₁₂ C₁-C₈-Alkylen, bevorzugt C₁-C₄-Alkylen, weiter bevorzugt Methylen oder Ethylen, ist.

4. Feuchtigkeits- und strahlungshärtbare Klebstoffzusammensetzung nach einem der Ansprüche 1 bis 3, wobei a eine ganze Zahl von 1 bis 5, bevorzugt von 1 bis 3, ist, b eine ganze Zahl von 0 bis 5, bevorzugt von 0 bis 3, ist, und c eine ganze Zahl von 0 bis 5, bevorzugt von 0 bis 3, ist.

5. Feuchtigkeits- und strahlungshärtbare Klebstoffzusammensetzung nach einem der Ansprüche 1 bis 4, wobei R₁₄ bis R₁₇, R₂₀ und R₂₁ jeweils unabhängig aus der Gruppe ausgewählt sind, die aus C₁-C₈-Alkyl, C₁-C₈-Alkoxyl, C₂-C₈-Alkenyl, C₃-C₈-Cycloalkyl und C₇-C₁₆-Aralkyl besteht, und bevorzugt jeweils unabhängig aus C₁-C₆-Alkyl und C₁-C₆-Alkoxyl ausgewählt sind.

6. Feuchtigkeits- und strahlungshärtbare Klebstoffzusammensetzung nach einem der Ansprüche 1 bis 5, wobei R₂₂ C₁-C₈-Alkylen, bevorzugt C₁-C₄-Alkylen, weiter bevorzugt Methyl oder Ethyl, ist; und/oder R₂₃ C₆-C₉-Alkylen, bevorzugt Phenylen oder Naphthalin, ist; und/ oder R₂₄ C₁-C₈-Alkylen, bevorzugt C₁-C₄-Alkylen, weiter bevorzugt Methyl oder Ethyl ist.

7. Feuchtigkeits- und strahlungshärtbare Klebstoffzusammensetzung nach einem der Ansprüche 1 bis 6, wobei d eine ganze Zahl von 1 bis 5, bevorzugt von 1 bis 3, ist, e eine ganze Zahl von 0 bis 5, bevorzugt von 0 bis 3, ist, und f eine ganze Zahl von 0 bis 5, bevorzugt von 0 bis 3, ist.

8. Feuchtigkeits- und strahlungshärtbare Klebstoffzusammensetzung nach einem der Ansprüche 1 bis 7, wobei die Komponente (a) in einer Menge von 40 bis 85 Gew.-%, bevorzugt 45 bis 80 Gew.-%, basierend auf dem Gesamtgewicht aller Komponenten vorhanden ist.

9. Feuchtigkeits- und strahlungshärtbare Klebstoffzusammensetzung nach einem der Ansprüche 1 bis 8, wobei die Komponente (b) in einer Menge von 10 bis 50 Gew.-%, bevorzugt 15 bis 45 Gew.-%, basierend auf dem Gesamtgewicht aller Komponenten vorhanden ist.

10. Feuchtigkeits- und strahlungshärtbare Klebstoffzusammensetzung nach einem der Ansprüche 1 bis 9, wobei die Komponente (e) in einer Menge von 1 bis 30 Gew.-%, bevorzugt 3 bis 25 Gew.-%, basierend auf dem Gesamtgewicht aller Komponenten vorhanden ist.

11. Feuchtigkeits- und strahlungshärtbare Klebstoffzusammensetzung nach einem der Ansprüche 1 bis 10, wobei das gehärtete Umsetzungserzeugnis der Zusammensetzung eine Shore-00-Härte von 1 bis 30, bevorzugt 5 bis 25, 7 Tage nach dem Härten, bei 25 °C, gemessen gemäß ASTM D2240; und/oder eine Dehnung von 100 % bis 300 %, bevorzugt 110 % bis 250 %, 7 Tage nach dem Aushärten, bei 25 °C, gemessen gemäß ASTM D412, aufweist.

12. Feuchtigkeits- und strahlungshärtbare Zusammensetzung nach Anspruch 1, umfassend:
40 bis 85 Gew.%, bevorzugt 45 bis 80 Gew.% der Komponente (a);
10 bis 50 Gew.%, bevorzugt 15 bis 45 Gew.% der Komponente (b);
0,1 bis 5 Gew.-%, bevorzugt 1 bis 3 Gew.-% der Komponente (c);
0,05 bis 1 Gew.-%, bevorzugt 0,1 bis 0,5 Gew.-% der Komponente (d);
1 bis 30 Gew.-%, bevorzugt 3 bis 25 Gew.-% der Komponente (e); und
0,05 bis 1 Gew.-%, bevorzugt 0,1 bis 0,5 Gew.-% der Komponente (f),
wobei die Gewichtsprozente auf dem Gesamtgewicht aller Komponenten basieren.

13. Gehärtetes Erzeugnis der feuchtigkeits- und strahlungshärtbaren Klebstoffzusammensetzung nach einem der Ansprüche 1 bis 12.

14. Beschichtetes Substrat, das auf mindestens einer Oberfläche mit der feuchtigkeits- und strahlungshärtbaren Klebstoffzusammensetzung nach einem der Ansprüche 1 bis 12 oder dem gehärteten Erzeugnis nach Anspruch 13 beschichtet ist.

15. Verwenden der feuchtigkeits- und strahlungshärtbaren Klebstoffzusammensetzung nach einem der Ansprüche 1 bis 12 oder des gehärteten Erzeugnisses nach Anspruch 13 beim Herstellen von Anzeigetafeln, Berührungsbedienfeldtafeln oder optischen Vorrichtungen.

## Revendications

1. Composition adhésive durcissable par humidité et par rayonnement, comprenant :
(a) au moins un polyorganosiloxane à terminaison mono(méth)acryloxy représenté par la formule : 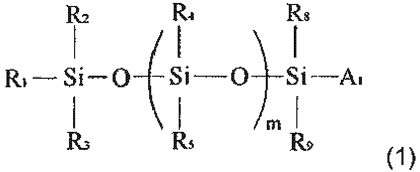 dans laquelle,
R₁ à R₅, R₈ et R₉ sont chacun indépendamment choisis dans le groupe constitué par un alkyle en C₁ à C₂₀, un alcoxyle en C₁ à C₂₀, un alcényle C₂ à C₂₀, un cycloalkyle en C₃ à C₂₀, et un aralkyle en C₇ à C₂₂, à condition qu'au moins l'un des R₁ à R₅, R₈ et R₉ soit un alcoxyle en C₁ à C₂₀,
m est un entier de 1 à 1 000,
A₁ est représenté par la formule (2) :
(R₁₀)ₐ(R₁₁)_{b}(R₁₂)_{c}R₁₃ (2)
dans laquelle :
R₁₀ est un alkylène en C₁ à C₂₀,
R₁₁ est un arylène en C₆ à C₂₁,
R₁₂ est un alkylène en C₁ à C₂₀,
R₁₃ est un (méth)acryloxy,
a est un entier de 0 à 10,
b est un entier de 0 à 10, et
c est un entier de 0 à 10 ;
(b) au moins un polyorganosiloxane à terminaison di(méth)acryloxy représenté par la formule : 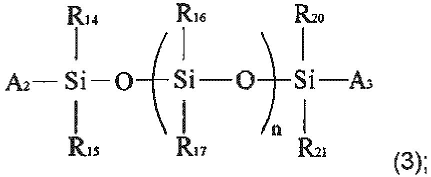 dans laquelle :
R₁₄ à R₁₇, R₂₀ et R₂₁ sont chacun indépendamment choisis dans le groupe constitué par un alkyle en C₁ à C₂₀, un alcoxyle en C₁ à C₂₀, un alcényle en C₂ à C₂₀, un cycloalkyle en C₃ à C₂₀, et un aralkyle en C₇ à C₂₂, à condition qu'au moins l'un des R₁₄ à R₁₇, R₂₀ et R₂₁ soit un alcoxyle en C₁ à C₂₀, n est un entier de 1 à 1000,
A₂ et A₃ sont chacun représenté indépendamment par la formule :
(R₂₂)_{d}(R₂₃)ₑ(R₂₄)_{f}R₂₅ (4)
dans laquelle :
R₂₂ est un alkylène en C₁ à C₂₀,
R₂₃ est un arylène en C₆ à C₂₁,
R₂₄ est un alkylène en C₁ à C₂₀,
R₂₅ est un (méth)acryloxy,
d est un entier de 0 à 10,
e est un entier de 0 à 10, et
f est un entier de 0 à 10 ;
(c) un photo-initiateur ;
(d) un catalyseur durcissant à l'humidité ;
(e) facultativement, un allongeur de chaîne ; et
(f) facultativement, un réticulant d'humidité.

2. Composition adhésive durcissable par humidité et par rayonnement selon la revendication 1, dans laquelle R₁ à R₅, R₈ et R₉ sont choisis chacun indépendamment dans le groupe constitué par un alkyle en C₁ à C₈, un alcoxyle en C₁ à C₈, un alcényle en C₂ à C₈, un cycloalkyle en C₃ à C₈ et un aralkyle en C₇ à C₁₆.

3. Composition adhésive durcissable par humidité et par rayonnement selon la revendication 1 ou 2, dans laquelle R₁₀ est un alkylène en C₁ à C₈, de préférence un alkylène en C₁ à C₄, plus préférablement du méthylène ou de l'éthylène ; et/ou R₁₁ est un alkylène en C₆ à C₉, de préférence un phénylène ou un naphtalène ; et/ou R₁₂ est un alkylène en C₁ à C₈, de préférence un alkylène en C₁ à C₄, plus préférablement le méthylène ou l'éthylène.

4. Composition adhésive durcissable par humidité et par rayonnement selon l'une quelconques des revendications 1 à 3, dans laquelle a est un entier de 1 à 5, de préférence de 1 à 3, b est un entier de 0 à 5, de préférence de 0 à 3, et c est un entier de 0 à 5, de préférence de 0 à 3.

5. Composition adhésive durcissable par humidité et par rayonnement selon l'une quelconque des revendications 1 à 4, dans laquelle R₁₄ à R₁₇, R₂₀ et R₂₁ sont chacun indépendamment sélectionnés dans le groupe constitué par un alkyle en C₁ à C₈, un alcoxyle en C₁ à C₈, un alcényle en C₂ à C₈, un cycloalkyle en C₃ à C₈, et un aralkyle en C₇ à C₁₆ et sont de préférence choisis chacun indépendamment parmi un alkyle en C₁ à C₆ et un alcoxyle en C₁ à C₆.

6. Composition adhésive durcissable par humidité et par rayonnement selon l'une quelconque des revendications 1 à 5, dans laquelle R₂₂ est un alkylène en C₁ à C₈, de préférence un alkylène en C₁ à C₄, plus préférablement méthyle ou éthyle ; et/ou R₂₃ est un alkylène en C₆ à C₉, de préférence un phénylène ou un naphtalène ; et/ou R₂₄ est un alkylène en C₁ à C₈, de préférence un alkylène en C₁ à C₄, plus préférablement méthyle ou éthyle.

7. Composition adhésive durcissable par humidité et par rayonnement selon l'une quelconques des revendications 1 à 6, dans laquelle d est un entier de 1 à 5, de préférence de 1 à 3, e est un entier de 0 à 5, de préférence de 0 à 3, et f est un entier de 0 à 5, de préférence de 0 à 3.

8. Composition adhésive durcissable par humidité et par rayonnement selon l'une quelconque des revendications 1 à 7, dans laquelle le composant (a) est présent en une quantité de 40 à 85 % en poids, de préférence 45 à 80 % en poids, sur la base du poids total de tous les composants.

9. Composition adhésive durcissable par humidité et par rayonnement selon l'une quelconque des revendications 1 à 8, dans laquelle le composant (b) est présent en une quantité de 10 à 50 % en poids, de préférence de 15 à 45 % en poids, sur la base du poids total de tous les composants.

10. Composition adhésive durcissable par humidité et par rayonnement selon l'une quelconque des revendications 1 à 9, dans laquelle le composant (e) est présent en une quantité de 1 à 30 % en poids, de préférence de 3 à 25 % en poids sur la base du poids total de tous les composants.

11. Composition adhésive durcissable par humidité et par rayonnement selon l'une quelconque des revendications 1 à 10, dans laquelle le produit de réaction durci de la composition présente une dureté Shore 00 de 1 à 30, de préférence de 5 à 25, après 7 jours de durcissement, à 25 °C, telle que mesurée selon ASTM D2240 ; et/ou un allongement de 100 % à 300 %, de préférence de 110 % à 250 %, après 7 jours de durcissement, à 25 °C, tel que mesuré selon ASTM D412.

12. Composition durcissable par humidité et par rayonnement selon la revendication 1, comprenant :
40 à 85 % en poids, de préférence 45 à 80 % en poids du composant (a) ;
10 à 50 % en poids, de préférence 15 à 45 % en poids du composant (b) ;
0,1 à 5 % en poids, de préférence 1 à 3 % en poids du composant (c) ;
0,05 à 1 % en poids, de préférence 0,1 à 0,5 % en poids du composant (d) ;
1 à 30 % en poids, de préférence 3 à 25 % en poids du composant (e) ; et
0,05 à 1 % en poids, de préférence 0,1 à 0,5 % en poids du composant (f),
les pourcentages en poids étant basés sur le poids total de tous les composants.

13. Produit de réaction durci de la composition adhésive durcissable par humidité et par rayonnement selon l'une quelconque des revendications 1 à 12.

14. Substrat revêtu qui est revêtu sur au moins une surface avec la composition adhésive durcissable par humidité et par rayonnement selon l'une quelconque des revendications 1 à 12 ou le produit durci selon la revendication 13.

15. Utilisation de la composition adhésive durcissable par humidité et par rayonnement selon l'une quelconque des revendications 1 à 12 ou du produit durci selon la revendication 13 dans la fabrication d'écrans d'affichage, d'écrans tactiles ou de dispositifs optiques.
